(19) Europäisches Patentamt / European Patent Office / Office européen des brevets

(11) **EP 4 423 601 B1**

(12) **EUROPEAN PATENT SPECIFICATION**

(45) Date of publication and mention
of the grant of the patent:
**21.01.2026  Bulletin 2026/04**

(21) Application number: **22808771.4**

(22) Date of filing: **24.10.2022**

(51) International Patent Classification (IPC):
**G06F 9/30** (2018.01)

(52) Cooperative Patent Classification (CPC):
**G06F 9/3001; G06F 9/30014**

(86) International application number:
**PCT/EP2022/079502**

(87) International publication number:
**WO 2023/072791 (04.05.2023 Gazette 2023/18)**

(54) **PERFORMING A FLOATING-POINT MULTIPLY-ADD OPERATION IN A COMPUTER IMPLEMENTED ENVIRONMENT**

DURCHFÜHRUNG EINER GLEITKOMMAMULTIPLIKATIONS-ADDITIONS-OPERATION IN EINER COMPUTERIMPLEMENTIERTEN UMGEBUNG

RÉALISATION D'UNE OPÉRATION DE MULTIPLICATION-ADDITION À VIRGULE FLOTTANTE DANS UN ENVIRONNEMENT MIS EN OEUVRE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.10.2021  US 202117452425**

(43) Date of publication of application:
**04.09.2024  Bulletin 2024/36**

(73) Proprietor: **International Business Machines Corporation
Armonk, NY 10504 (US)**

(72) Inventors:
• **FIGULI, Razvan Peter**
**71032 Boeblingen (DE)**
• **LICHTENAU, Cedric**
**71032 Boeblingen (DE)**
• **BABINSKY, Tina**
**71032 Boeblingen (DE)**
• **HOFMANN, Nicol**
**71032 Boeblingen (DE)**
• **STEINMACHER-BUROW, Burkhard**
**71032 Boeblingen (DE)**

(74) Representative: **IBM Deutschland GmbH
Intellectual Property Law
Schönaicher Straße 220
71032 Böblingen (DE)**

(56) References cited:
EP-A1- 3 396 535          EP-A1- 3 640 792
EP-A2- 3 547 115          US-A1- 2004 186 870
US-A1- 2017 351 519

## Description

The present invention relates in general to data processing computer systems. In particular, the present invention relates to a processor-implemented method and an apparatus for performing a floating-point multiply-add operation on at least one multiply-add unit.

BACKGROUND

Typical artificial intelligence (AI) accelerators consist of arrays of many processing tiles (PTs) or processing elements (PEs) optimized for high throughput or high efficiency, measured in floating point operations per second (FLOPS) (FLOPS/Watt or FLOPS/area). Infrastructure overhead within a tile, such as control complexity, wiring and memory footprint, gets multiplied by a number of tiles, reducing the overall efficiency of the method. For instance, a "Load" instruction to write unmodified data to a local register file (LRF) for re-use requires a dedicated instruction and decode logic, a second write port to the LRF or a by-pass logic and control, as well as eventually collision avoidance. These features would be utilized only a small fraction of the overall compute time. Hence a need exists for efficient infrastructure to load floating-point values to a LRF without hardware overhead.

US 2019/0042254 A1 discloses systems and methods to load a tile register pair. A processor is disclosed, including: decode circuitry to decode a load matrix pair instruction having fields for an opcode and source and destination identifiers to identify source and destination matrices, respectively, each matrix having a PAIR parameter equal to TRUE, and execution circuitry to execute the decoded load matrix pair instruction to load every element of left and right tiles of the identified destination matrix from corresponding element positions of left and right tiles of the identified source matrix, respectively, wherein the executing operates on one row of the identified destination matrix at a time, starting with the first row.

The cited reference uses extra dedicated load/store instructions to load/store a register pair. The system requires tile configuration using extra dedicated instructions (TILECONFIG, TILERELEASE etc.).

US 2021/0089316 A1 discloses deep learning implementations using systolic arrays and fused operations. A processor is disclosed, including fetch and decode circuitry to fetch and decode an instruction having fields to specify an opcode and locations of a destination and N source matrices, the opcode indicating the processor is to load the N source matrices from memory, perform N convolutions on the N source matrices to generate N feature maps, and store results of the N convolutions in registers to be passed to an activation layer, wherein the processor is to perform the N convolutions and the activation layer with at most one memory load of each of the N source matrices. The processor further includes scheduling circuitry to schedule execution of the instruction and execution circuitry to execute the instruction as per the opcode.

The cited reference focusses on the application of convolution and subsequent layers. The embodiment disclosed uses extra dedicated load/store instructions to load/store a register pair. The system requires tile configuration using extra dedicated instructions (TILECONFIG, TILERELEASE etc.).

US 9,778,908 B2 discloses a method provided in a microprocessor for performing a fused multiply-accumulate operation of a form: $\pm A*B \pm C$, wherein A, B and C are input operands, and wherein no rounding occurs before C is accumulated to a product of A and B. The fused multiply-accumulate operation is split into first and second multiply-accumulate sub-operations to be performed by one or more instruction execution units. In the first multiply-accumulate sub-operation, a selection is made whether to accumulate partial products of A and B with C, or to instead accumulate only the partial products of A and B, and to generate therefrom an unrounded nonredundant sum. Between the first and second multiply-accumulate sub-operations, the unrounded nonredundant sum is stored in memory, enabling the one or more instruction execution units to perform other operations unrelated to the multiply-accumulate operation. Alternatively, or in addition, the unrounded nonredundant sum is forwarded from a first instruction execution unit to a second instruction execution unit. In the second multiply-accumulate sub-operation, C is accumulated with the unrounded nonredundant sum if the first multiply-accumulate sub-operation produced the unrounded nonredundant sum without accumulating C. In the second multiply-accumulate sub-operation, a final rounded result is generated from the fused multiply-accumulate operation.

The cited reference describes the fused multiply-accumulate operation being able amongst others to compute A*B by setting C to 0. This is not possible for IEEE (Institute of Electrical and Electronics Engineers) compliant floating-point numbers, because a -0.0 on either A or B would cause the exact-zero-difference case when added to +0.0, hence the result would have a wrong sign.

EP 3,396,535 discloses a compute apparatus to perform machine learning operations, the apparatus comprising a decode unit to decode a single instruction into a decoded instruction that specifies multiple operands including an input value and a quantized weight value associated with a neural network and an arithmetic logic unit including a barrel shifter, an adder, and an accumulator register, wherein to execute the decoded instruction, the barrel shifter is to shift the input value by the quantized weight value to generate a shifted input value and the adder is to add the shifted input value to a value stored in the accumulator register and update the value stored in the accumulator register.

EP 3,640,792 discloses an arithmetic processing device that has, when any or both of a first operand and a second operand included in a multiply-add operation instruction is or are zero, an exponent setting unit that sets an exponent of the first operand to a first set value, and sets an exponent of the second operand to a second set value. An exponent calculation unit calculates an exponent obtained by a multiply-add operation, based on the exponents of the first and second operands outputted by the exponent setting unit and an exponent of a third operand included in the multiply-add operation instruction. The sum of the first set value and the second set value is set so that a bit position of the third operand is located on a higher-order bit side than the most significant bit of the sum of the first operand and the second operand.

SUMMARY

Aspects of the present invention are defined in the attached claims. A computer implemented method includes performing a floating-point multiply-add operation of a form A*B+C on at least one multiply-add unit, and relates to a processor comprising at least one apparatus for performing a floating-point multiply-add operation, and a non-transitory machine-readable medium comprising instructions for performing a floating-point multiply-add operation.

A processor-implemented method is proposed for performing a floating-point multiply-add operation of a form A*B+C on at least one multiply-add unit, with three input floating-point operands A, B, C, wherein at least one of the operands A, B, C is substituted by at least one value of a predefined operand value set.

The inventive method is using a selectable-operation floating-point-multiply-add (soFMA) unit. The soFMA unit exhibits a software use and a hardware implementation which enhances that of a floating-point-multiply-add (FMA) unit, wherein an FMA unit inputs the values A, B, C to compute a value D=A*B+C as an output by the FMA unit.

Benefits of the proposed method are that no by-pass logic is needed for performing the load operation. There is no second write port in the LRF needed. Further there is no dedicated load instruction and decode logic needed.

Thus, area and power savings may be advantageous. Wiring complexity and routing congestions are reduced. The method supports all floating-point values, normal and denormal floating point values.

The method allows multiple instruction multiple data (MIMD) like execution on single instruction multiple data (SIMD) processors at reduced costs.

The method allows vectorization of workloads that usually are not considered vectorizable.

Due to an embodiment of the invention, additionally or alternatively, further the method may at least comprise providing at least one of the floating-point operands A, B, C by a substitution logic, and configuring the substitution logic to be separately configurable to substitute the operand A, B, C by the at least one value of the predefined operand value set to be propagated to at least one output port of the substitution logic. Thus, the substitution logic allows to pass an arbitrary floating-point value unchanged or to perform correct IEEE compliant floating-point multiply, add or multiply-add operations through a soFMA unit.

Due to an embodiment of the invention, additionally or alternatively, the substitution logic may be configured as a multiplexor circuitry. Further the method may at least comprise providing at least one of the three floating-point operands A, B, C by the multiplexor circuitry respectively, the multiplexor circuitry comprising a first input port for the respective floating-point operand A, B, C and at least a second input port for at least one value of a predefined operand value set, and at least one output port, and configuring the multiplexor circuitry to be separately configurable to select one of the input ports to be propagated to the at least one output port. Advantageously the input values for the soFMA unit may be controlled in an efficient way.

According to an embodiment of the inventive method, one or two or all three of the input operands A, B, C each may be provided by a multiplexor circuitry. A first multiplexor circuitry for a first input port of the soFMA unit may provide a first operand value A or one of the values from a set comprising values -0, +0, +1, -1. Likewise, for a second operand value B and a third operand value C.

For example, by selecting the value +1 in the first multiplexor circuitry, the soFMA unit performs the operation B+C. The method includes a select code which encodes the selection by each of the input multiplexor circuitries of the soFMA unit. For example, for a soFMA unit with three multiplexor circuitries for the operands A, B, C, the 12 different select codes comprising values 0, 1, 2, 3, 4, 5, 6, 7, 8, 9, 10, 11 could correspond to the 12 different selectable operations -0, C, A, A+C, B, B+C, A*B, A*B+C, C+1, 1, -A+C, -B+C performed by the soFMA unit. The IEEE floating point standard enables a correct result for the selectable operations for all input operand values A, B, C.

Due to an embodiment of the invention, additionally or alternatively, further the floating-point multiply-add operation may be triggered by an instruction with a selection code parameter to specify the configuration of the substitution logic. Thus, the input values for the soFMA unit may be controlled in an efficient way.

Due to an embodiment of the invention, additionally or alternatively, further the predefined operand value set may be configured at least as a set comprising values -0, +0, +1, -1. Thus, the constant values serve for controlling the floating-point operation in an appropriate manner.

Due to an embodiment of the invention, additionally or alternatively, further one of the input ports may be selected to be propagated to the at least one output port by the selection code parameter, being at least one of a set corresponding to selectable operations comprising parameters -0, C, A, A+C, B, B+C, A*B, A*B+C, C+1, 1, -A+C, -B+C. By this way the steps needed for performing the floating-point operation may be selected in an appropriate way.

Due to an embodiment of the invention, additionally or alternatively, further a floating-point multiply-multiply-add operation of a form A0*B0+A1*B1+C may be performed with input floating-point operands comprising operands A0, A1, B0, B1, C. Thus, the method allows to load a concatenated pair of two arbitrary floating-point values to a register file through a floating-point multiply-multiply-add (FMMA) unit.

Due to an embodiment of the invention, additionally or alternatively, further floating-point operands may be provided by a register file as input operands and an output may be received from the substitution logic by a register file with at least two read ports and one write port. In particular the input operands may be provided to be triggered by the instruction with a selection code parameter. Thus, it is advantageously possible to load an arbitrary floating-point value to a register file through a soFMA unit.

Due to an embodiment of the invention, additionally or alternatively, further, if a processor comprises an interconnected mesh of apparatuses with at least one multiply-add unit each, wherein each multiply-add unit comprises at least one local register file for an intermediate storage of data values, the floating-point multiply-add operation may be triggered by an instruction with a selection code parameter to specify a configuration of the substitution logic.

One embodiment of the inventive method enhances that of a dataflow device consisting of an interconnected mesh of FMA units, where each FMA unit has local registers for the intermediate storage of values. In such a dataflow device, a soFMA unit can reduce the hardware required to support storing a value from the mesh to a local register. The dataflow device consisting of an interconnected mesh of soFMA units can provide a higher application performance.

Due to an embodiment of the invention, additionally or alternatively, further, if a processor comprises a single-instruction-multiple-data device with multiple apparatuses with at least one multiply-add unit each, providing predicate values per apparatus by a predicate register may be specified by an instruction, selecting an execution of a floating-point multiply-add operation for each apparatus.

A further embodiment of the inventive method enhances a single-instruction-multiple-data (SIMD) device in a CPU core. A SIMD device includes multiple FMA units. For a SIMD device, a software instruction can specify a register providing a predicate value per FMA to select each FMA's execution of the instruction. In a SIMD device with soFMA units, a software instruction can specify a register providing a select code per soFMA to select each soFMA's execution of the instruction. The SIMD device with soFMA units can provide a higher application performance than a SIMD with FMA units. A SIMD device with soFMA units is a type of MIMD device. The higher performance results from three reasons. Vectorizing of unequal operations is enabled, thus enabling benefits from the parallel structures of the SIMD devices. Fewer instructions are needed, as IF-ELSE-statements may be reduced or may be replaced by predicates. The reduction of IF-ELSE-statements leads to fewer time-consuming pipeline flushes resulting from false branch predictions.

Due to an embodiment of the invention, additionally or alternatively, further, if the predicate register comprises multi-bit predicate fields comprising the predicate values, which are enabled by the instructions, predicate values may be executed on lanes of apparatuses to change a flavor of individual lanes based on the respective predicate value for each lane. Thus, the method allows a dynamic multi-bit predication of individual SIMD lanes based on a previous result vector.

Due to an embodiment of the invention, additionally or alternatively, at least one operand of an internal operation in the at least one multiply-add unit of an apparatus may be substituted by at least one value of a predefined operand value set. The operation may be triggered by a predicate value specified and decoded into a selection code parameter by a predicate logic based on predicate values provided by a load-store unit, on results of previous instructions and on an information about dynamic or static use. Thus, in a SIMD approach the method may further be used in conjunction with predicates to allow each individual SIMD lane to execute a different operation.

Further, an apparatus is proposed for performing a floating-point multiply-add operation of a form A*B+C on at least one multiply-add unit with a method as described above, with three input floating-point operands A, B, C, wherein at least one of the floating-point operands A, B, C is provided by a substitution logic, being configured to be separately configurable to substitute the operand A, B, C by the at least one value of the predefined operand value set to be propagated to at least one output port of the substitution logic.

The apparatus comprises at least one selectable-operation floating-point-multiply-add (soFMA) unit. The soFMA unit exhibits a software use and a hardware implementation which enhances that of a floating-point-multiply-add (FMA) unit, wherein an FMA unit inputs the values A, B, C to compute a value D=A*B+C as an output by the FMA unit.

Benefits of the proposed apparatus are that no by-pass logic is needed for performing the floating-point multiply-add operation. There is no second write port in the LRF needed. Further there is no dedicated load instruction and decode logic needed.

Thus, area and power savings may be advantageous. Wiring complexity and routing congestions are reduced. The apparatus supports all floating-point values, normal and denormal floating point values.

Due to an embodiment of the invention, additionally or alternatively, the substitution logic may be configured as a multiplexor circuitry, wherein at least one of the three floating-point operands A, B, C is provided by the multiplexor circuitry respectively. The multiplexor circuitry may comprise a first input port for the respective floating-point operand A, B, C, at least a second input port for at least one value of a predefined operand value set and at least one output port assigned to the corresponding first and second input ports. The multiplexor circuitry may be configured to be separately configurable to select one of the input ports to be propagated to the at least one output port.

According to the embodiment, one or two or all three of the input operands A, B, C each may be provided by a multiplexor circuitry. A first multiplexor circuitry for a first input port of the soFMA unit may provide a first operand value A or one of the values from a set comprising values -0, +0, +1, -1. Likewise, for a second operand value B and a third operand value C.

For example, by selecting the value +1 in the first multiplexor circuitry, the soFMA unit performs the operation B+C. The method includes a select code which encodes the selection by each of the input multiplexor circuitries of the soFMA unit. For example, for a soFMA unit with three multiplexor circuitries for the operands A, B, C, the 12 different select codes comprising values 0, 1, 2, 3, 4, 5, 6, 7, 8, 9, 10, 11 could correspond to the 12 different selectable operations -0, C, A, A+C, B, B+C, A*B, A*B+C, C+1, 1, -A+C, -B+C performed by the soFMA unit. The IEEE floating point standard enables a correct result for the selectable operations for all input operand values A, B, C.

Due to an embodiment of the invention, additionally or alternatively, the floating-point multiply-add operation may be triggered by an instruction with a selection code parameter to specify a configuration of the at least one substitution logic. Thus, the input values for the soFMA unit may be controlled in an efficient way.

Due to an embodiment of the invention, additionally or alternatively, the predefined operand value set at least may be configured as a set comprising values -0, +0, +1, -1. Thus, the constant values serve for controlling the floating-point operation in an appropriate manner.

Due to an embodiment of the invention, additionally or alternatively, the selection code parameter being used for selecting one of the input ports to be propagated to the at least one output port may be at least one of a set corresponding to selectable operations comprising -0, C, A, A+C, B, B+C, A*B, A*B+C, C+1, 1, -A+C, -B+C. By this way the steps needed for performing the floating-point operation may be selected in an appropriate way.

Due to an embodiment of the invention, additionally or alternatively, the apparatus may comprise at least a multiply-add unit with three inputs, wherein at least one input is received from an output of the at least one substitution logic. Thus, at least the one input may be used for controlling the floating-point operation to be performed by the FMA unit.

Due to an embodiment of the invention, additionally or alternatively, the apparatus may comprise a register file with at least two read ports and one write port, wherein the register file may be configured for providing input operands and may be configured for receiving an output from the multiply-add unit. In particular the register file may provide the input operands being triggered by the instruction with a selection code parameter. Thus, it is advantageously possible to load an arbitrary floating-point value to a register file through a soFMA unit.

Due to an embodiment of the invention, additionally or alternatively, the apparatus may be configured for performing a floating-point multiply-multiply-add operation of a form A0*B0+A1*B1+C, with input floating-point operands comprising A0, A1, B0, B1, C. Thus, the apparatus allows to load a concatenated pair of two arbitrary floating-point values to a register file through a floating-point multiply-multiply-add (FMMA) unit.

Further, a processor is proposed, comprising at least one apparatus for performing a floating-point multiply-add operation, wherein at least one of the floating-point operands A, B, C is provided by a substitution logic respectively, wherein the floating-point multiply-add operation is triggered by an instruction with a selection code parameter to specify a configuration of the substitution logic.

Advantageously, the processor comprises at least one apparatus with a selectable-operation floating-point-multiply-add (soFMA) unit. The soFMA unit exhibits a software use and a hardware implementation which enhances that of a floating-point-multiply-add (FMA) unit, wherein an FMA unit inputs the values A, B, C to compute a value D=A*B+C as an output by the FMA unit.

Such a processor exhibits advantageous area and power savings. Wiring complexity and routing congestions are reduced. The processor supports all floating-point values, normal and denormal floating point values.

Due to an embodiment of the invention, additionally or alternatively, the processor may comprise a single-instruction-multiple-data device with multiple apparatuses, wherein a predicate register is specified by an instruction providing predicate values per apparatus to select an execution of a floating-point multiply-add operation for each apparatus.

The embodiment enhances a single-instruction-multiple-data (SIMD) device in a CPU core. A SIMD device includes multiple FMA units. For a SIMD device, a software instruction can specify a register providing a predicate value per FMA to select each FMA's execution of the instruction. In a SIMD device with soFMA units, a software instruction can specify a register providing a select code per soFMA to select each soFMA's execution of the instruction. The SIMD device with soFMA units can provide a higher application performance than a SIMD with FMA units. A SIMD device with soFMA units is a type of MIMD device.

Due to an embodiment of the invention, additionally or alternatively, the predicate register may comprise multi-bit predicate fields comprising the predicate values, wherein the predicate-fields are enabled by the instructions for executing the predicate values on lanes of apparatuses to change a flavor of individual lanes based on the respective predicates for each lane. Thus, the method allows a dynamic multi-bit predication of individual SIMD lanes based on a previous result vector.

Due to an embodiment of the invention, additionally or alternatively, at least one multiply-add unit may be configured to substitute at least one operand of an internal operation by at least one value of a predefined operand value set. The operation may be triggered by a predicate value specified and decoded into a selection code parameter by a predicate logic based on predicate values provided by a load-store unit, on results of previous instructions and on an information about dynamic or static use. Thus, in a SIMD approach the method may further be used in conjunction with predicates to allow each individual SIMD lane to execute a different operation.

Further, a non-transitory machine-readable medium is proposed, comprising instructions for performing a floating-point multiply-add operation of a form A*B+C with a method as described above, on at least one multiply-add unit, with three input floating-point operands A, B, C, wherein at least one of the operands A, B, C is substitutable by at least one value of a predefined operand value set.

The inventive method is using a selectable-operation floating-point-multiply-add (soFMA) unit. The soFMA unit exhibits a software use and a hardware implementation which enhances that of a floating-point-multiply-add (FMA) unit, wherein an FMA unit inputs the values A, B, C to compute a value D=A*B+C as an output by the FMA unit.

The method allows multiple instruction multiple data (MIMD) like execution on single instruction multiple data (SIMD) processors at reduced costs.

The method allows vectorization of workloads that usually are not considered vectorizable.

BRIEF DESCRIPTION OF THE SEVERAL VIEWS OF THE DRAWINGS

The present invention together with the above-mentioned and other objects and advantages may best be understood from the following detailed description of the embodiments, but not restricted to the embodiments.

FIG. 1 is a block diagram depicting an apparatus for performing a floating-point multiply-add operation of a form A*B+C on at least one multiply-add unit with three input floating-point operands A, B, C according to an embodiment of the invention.

FIG. 2 is a flow chart depicting operations for performing a floating-point multiply, add or multiply-add operation of a form A*B+C according to an embodiment of the invention with an apparatus according to Figure 1.

FIG. 3 is a schematic block diagram depicting an apparatus for performing a floating-point multiply-add operation according to a further embodiment of the invention using multiplexor circuitries.

FIG. 4 is a schematic block diagram depicting an apparatus for performing a floating-point multiply-add operation according to a further embodiment of the invention using a register file.

FIG. 5 is a schematic block diagram depicting a processor comprising a single-instruction-multiple-data device with multiple apparatuses with at least one multiply-add unit according to a further embodiment using predicates.

FIG. 6 is a schematic block diagram depicting a processor comprising a single-instruction-multiple-data device with multiple apparatuses with at least one multiply-add unit according to a further embodiment using dynamic multi-bit predication of individual SIMD lanes based on a previous result vector.

FIG. 7 is a schematic diagram depicting an example implementation of a dynamic predicate decode logic according to a further embodiment.

FIG. 8 is a schematic block diagram depicting an apparatus for performing a floating-point multiply-multiply-add operation according to a further embodiment of the invention.

FIG. 9 is a flow chart depicting operations of an example matrix-multiply program according to a further embodiment of the invention.

DETAILED DESCRIPTION

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

The illustrative embodiments described herein provide an apparatus for performing a floating-point multiply-add operation of a form A*B+C on at least one multiply-add unit with a method as described above, with three input floating-point operands A, B, C, wherein at least one of the floating-point operands A, B, C is provided by a substitution logic, being configured to be separately configurable to substitute the operand A, B, C by the at least one value of the predefined operand value set to be propagated to at least one output port.

The illustrative embodiments may further be used for a method for performing a floating-point multiply-add operation of a form A*B+C on at least one multiply-add unit, with three input floating-point operands A, B, C, wherein at least one of the operands A, B, C is substituted by at least one value of a predefined operand value set.

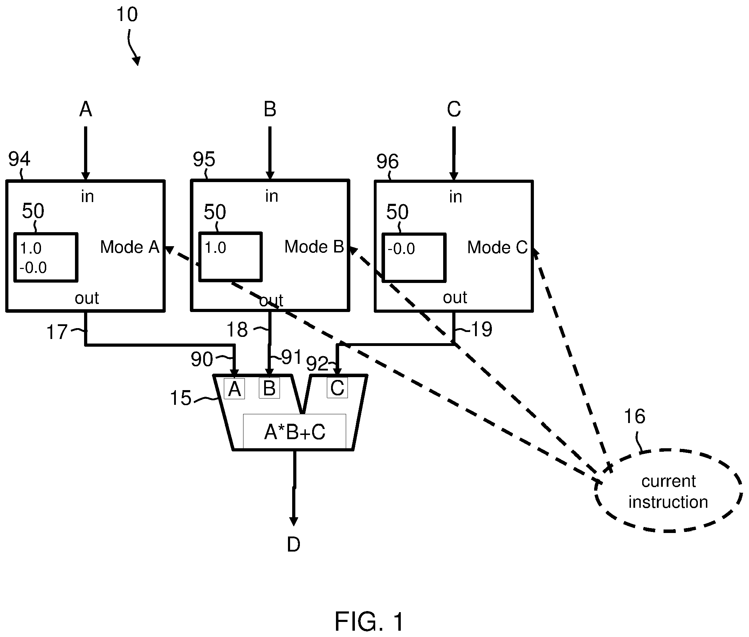

Figure 1 depicts an apparatus 10 for performing a floating-point multiply-add operation of a form A*B+C on at least one multiply-add unit 15 with three input floating-point operands A, B, C according to an embodiment of the invention.

The apparatus 10 represents a processing tile comprising an FMA unit 15 and three operand substitution logic units 94, 95, 96.

The floating-point operands A, B, C are provided by a substitution logic 94, 95, 96. The substitution logic 94, 95, 96 is configured to be separately configurable to substitute the operand A, B, C by the at least one value of the predefined operand value set 50 to be propagated to at least one output port 17, 18, 19 of the substitution logic 94, 95, 96 as an input 90, 91, 92 of the FMA unit 15.

The floating-point multiply-add operation is triggered by an instruction 16 with a selection code parameter to specify a configuration of the at least one substitution logic 94, 95, 96.

The predefined operand value set 50 at least is configured as a set comprising values -0, +0, +1, -1.

The multiply-add unit 15 comprises three inputs 90, 91, 92, wherein at least one input 90, 91, 92 is received from an output 17, 18, 19 of the at least one substitution logic 94, 95, 96.

The floating-point multiply-add operation is triggered by an instruction 16 with a selection code parameter to specify the configuration of the substitution logic 94, 95, 96.

The operand substitution logic 94 can be configured by a mode control input to either pass the input A or one of the well-defined floating-point constants 0x8000 (-0.0) or 0x3E00 (1.0) from the predefined operand value set 50 to the operand A of the FMA unit 15. The operand substitution logic 95 can be configured by a mode control input to either pass the input B or the well-defined floating-point constant 0x3E00 (1.0) to the operand B of the FMA unit 15. The operand substitution logic 96 can be configured by a mode control input to either pass the input C or the well-defined floating-point constant 0x8000 (-0.0) to the operand C of the FMA unit 15.

The FMA unit 15 can multiply two inputs (operand A and operand B) and add the third input (operand C) to the product. The three operand substitution logic units 94, 95, 96 are controlled by a current FMA instruction code 16 that has provisions for setting the substitution modes Mode A, Mode B, Mode C of each operand substitution unit 94, 95, 96 individually.

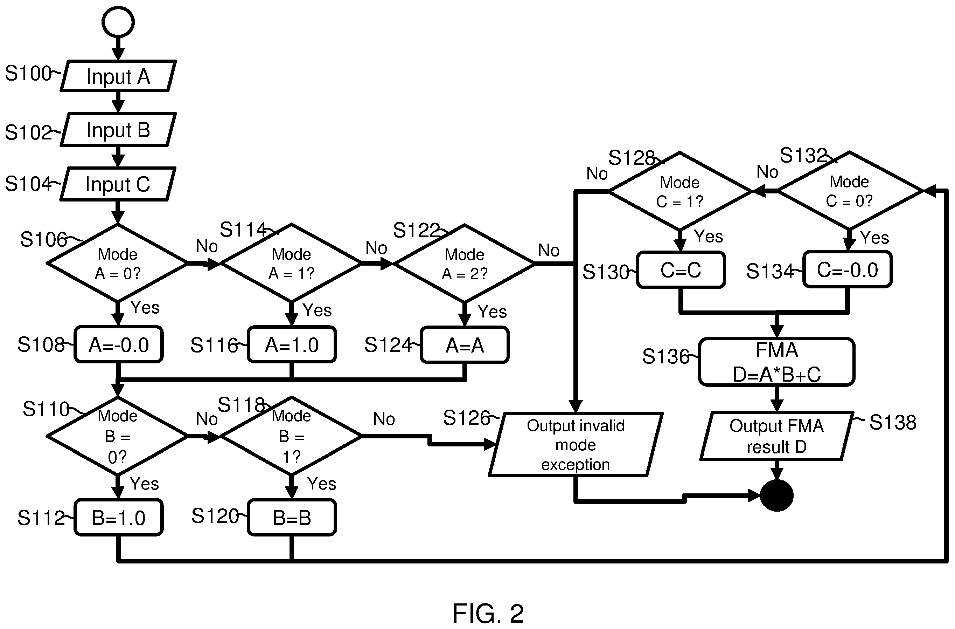

Figure 2 depicts a flow chart for performing a floating-point multiply, add or multiply-add operation of a form A*B+C according to an embodiment of the invention with an apparatus 10 according to Figure 1.

The three floating-point input operands A, B and C (input in steps S100, S102, S104) can be individually substituted by well-defined floating-point constants based on Mode A, Mode B, Mode C respectively.

A can be substituted at least by -0.0 (steps S106, S108) or 1.0 (steps S114, S116) or be left unchanged (steps S122, 124). B can be substituted at least by 1.0 (steps S110, S112) or be left unchanged (steps S118, S120). C can be substituted at least by -0.0 (steps S132, S134) or be left unchanged (steps S128, S130).

After the substitution step the resulting operands are processed by the FMA unit 15 to produce the operation D=A*B+C in step S136. Based on the individual substitution modes the result D corresponds to at least any of the selectable operations -0.0, A, B, C, A*B, A+C, B+C or A*B+C. The result D is set for output in step S138. An invalid mode exception is set in step S126 for output.

An extension of the method to allow each operand to be substituted by -0.0, +0.0, -1.0, +1.0 would further extend the set of selectable operations to at least -0.0, +0.0, A, B, C, -A, -B, A*B, -A*B, A+C, B+C, A*B+C, -1.0, 1.0, A+1.0, A-1.0, B+1.0, B-1.0, C+1.0, C-1.0.

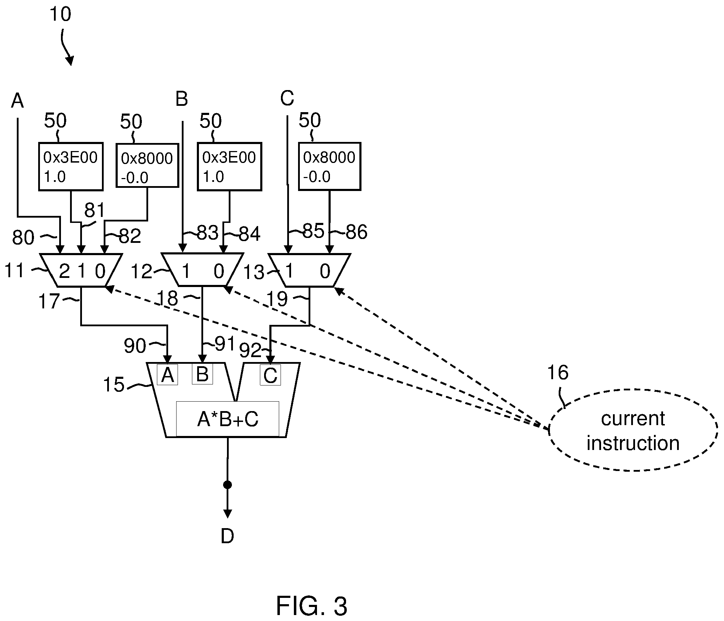

Figure 3 depicts an apparatus 10 for performing a floating-point multiply-add operation according to a further embodiment of the invention using multiplexor circuitries 11, 12, 13.

This embodiment realizes the operand substitution logic 94, 95, 96 of the embodiment shown in Figure 1 through multiplexor circuitries 11, 12, 13 to allow to pass an arbitrary floating-point value unchanged or to perform correct IEEE compliant floating-point multiply, add or multiply-add operations through an FMA unit 15.

The apparatus 10 as a processing tile comprises three operand multiplexor circuitries 11, 12, 13 and an FMA unit 15.

At least one of the three floating-point operands A, B, C is provided by the multiplexor circuitry 11, 12, 13 respectively, to the FMA unit 15. The multiplexor circuitry 11, 12, 13 comprises a first input port 80, 81, 82; 83, 84; 85, 86 for the respective floating-point operand A, B, C, at least a second input port 80, 81, 82; 83, 84; 85, 86 for at least one value of a predefined operand value set 50 and at least one output port 17, 18, 19 assigned to the corresponding first and second input ports 80, 81, 82; 83, 84; 85, 86. The multiplexor circuitry 11, 12, 13 is configured to be separately configurable to select one of the input ports 80, 81, 82; 83, 84; 85, 86 to be propagated to the at least one output port 17, 18, 19.

The multiplexor circuitry 11 with input ports 80, 81, 82 can be configured to select either the input A, the constant 0x8000 (-0.0) or the constant 0x3E00 (1.0) from a predefined value set 50. The multiplexor circuitry 12 with input ports 83, 84 can be configured to select either the input B or the constant 0x3E00 (1.0). The multiplexor circuitry 13 with input ports 85, 86 can be configured to select either the input C or the constant 0x8000 (-0.0).

The FMA unit 15 can multiply two inputs (operand A and operand B) from inputs 90, 91 and add the third input from input 92 (operand C) to the product D.

The select ports of the multiplexor circuitries 11, 12, 13 correspond to the mode control inputs of the operand substitution units 94, 95, 96 of the apparatus 10 shown in Figure 1 and are controlled by the current instruction 16.

One of the input ports 80, 81, 82; 83, 84; 85, 86 may be selected to be propagated to the corresponding at least one output port 17, 18, 19 by the selection code parameter, being at least one of a set corresponding to selectable operations comprising parameters -0, C, A, A+C, B, B+C, A*B, A*B+C, C+1, 1, -A+C, -B+C.

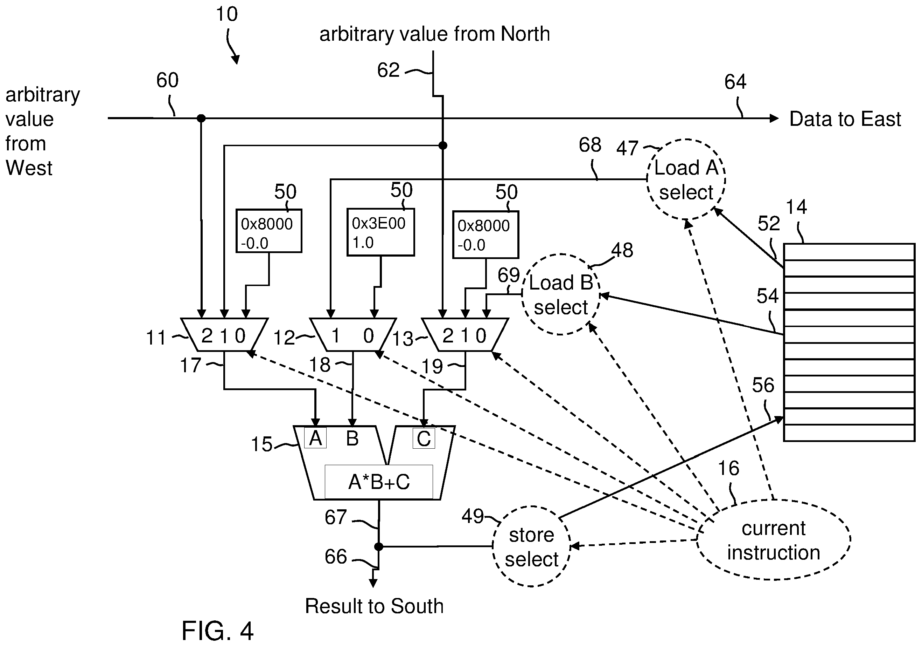

Figure 4 depicts an apparatus 10 for performing a floating-point multiply-add operation according to a further embodiment of the invention using a register file 14.

The apparatus 10 as a processing tile comprises three operand multiplexor circuitries 11, 12, 13, a local register file (LRF) 14 and an FMA unit 15.

The register file 14 comprises a first read port 52 and a second read port 54 and one write port 56. The register file 14 is configured for providing input operands 68, 69 and is configured for receiving an output 67 from the multiply-add unit 15 in particular providing the input operands 68, 69 being triggered by the instruction 16 with a selection code parameter.

The selection code parameter is used for selecting one of the input ports (corresponding to Figure 3) to be propagated to the at least one output port 17, 18, 19 being at least one of a set corresponding to selectable operations comprising -0, C, A, A+C, B, B+C, A*B, A*B+C, C+1, 1, -A+C, -B+C.

The multiplexor circuitry 11 can be configured to select either a data source from the West input 60 of the processing tile, a data source from the North input 62 of the processing tile or the constant 0x8000 (-0.0).

In another embodiment the data sources could have another orientation, e.g., from an East input and from a South input, without diverging from the inventive method.

The multiplexor circuitry 12 can be configured to select as an input operand 68 either a read-port 52 of the register file 14 or the constant 0x3E00 (1.0). The multiplexor circuitry 13 can be configured to select either a data source from the North input 62, a read-port 54 of the register file 14 or the constant 0x8000 (-0.0).

The local register file 14 is a register file with a first read port 52 and a second read port 54 and one write port 56.

The FMA unit 15 can multiply two inputs (operand A and operand B) and add the third input (operand C) to the product D as an output 67, which can be propagated to the South output 66 or to the write port 56 of the register file 14.

In the following table an exemplary setup of the operands of the multiplexor circuitries 11, 12, 13 with a selection code parameter to load arbitrary floating-point values from the North input 62 through the FMA unit 15 to the local register file 14 is depicted.

| MUX | Sel code | Selected source |
| --- | --- | --- |
| 11 | 0 | Constant 0x8000 (-0.0) in FMA unit 15 |
| 12 | 0 | Constant 0x3E00 (1.0) in FMA unit 15 |
| 13 | 2 | Data from North input 62 |

In the following table an exemplary setup of the operands of the multiplexor circuitries 11, 12, 13 with a selection code parameter to multiply a floating-point value from the West input 60 with a floating-point value from the local register file 14 and add another floating-point value from the local register file 14 is depicted. The result is written to the local register file 14 or passed to the South output 66.

| MUX | Sel code | Selected source |
| --- | --- | --- |
| 11 | 2 | Data from West input 60 |
| 12 | 1 | Data from LRF first read port 52 |

(continued)

| MUX | Sel code | Selected source |
|---|---|---|
| 13 | 0 | Data from LRF second read port 54 |

If a processor 100 comprises an interconnected mesh of apparatuses 10 with at least one multiply-add unit 15, 25, 35, 45 each, wherein each multiply-add unit 15, 25, 35, 45 comprises at least one local register file 14 for an intermediate storage of data values, the floating-point multiply-add operation is triggered by an instruction 16 with a selection code parameter to specify a configuration of the substitution logic 94, 95, 96.

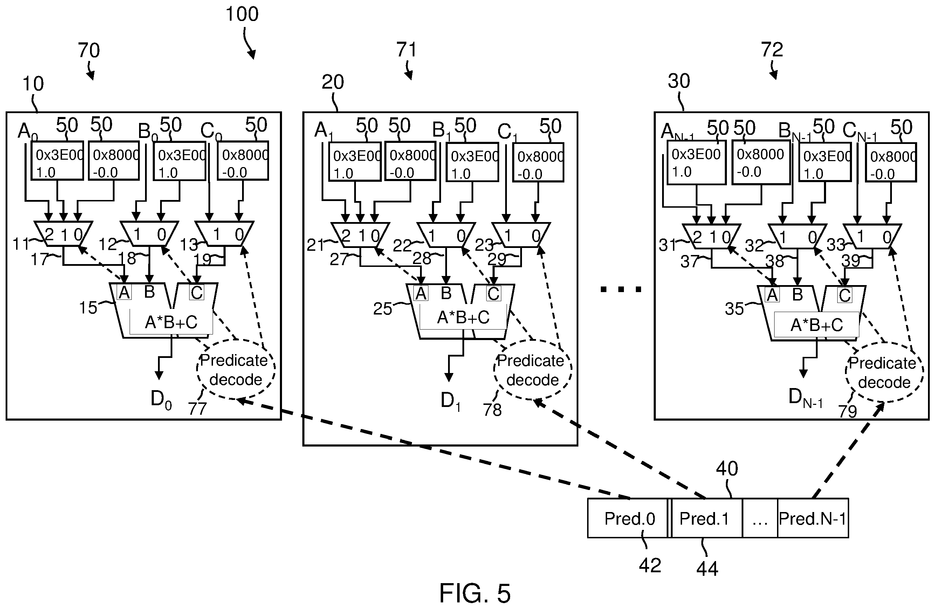

Figure 5 depicts a processor 100 comprising a single-instruction-multiple-data device with multiple apparatuses 10, 20, 30 with at least one multiply-add unit 15, 25, 35 each, according to a further embodiment using predicates 42.

The processor 100 comprises at least one apparatus 10 for performing a floating-point multiply-add operation, wherein at least one of the floating-point operands A, B, C is provided by a substitution logic 94, 95, 96 respectively. The floating-point multiply-add operation may be triggered by an instruction 16 with a selection code parameter to specify a configuration of the substitution logic 94, 95, 96. The substitution logic 94, 95, 96 may be realized as multiplexor circuits 11, 12, 13, 21, 22, 23, 31, 32, 33.

The processor 100 shown in Figure 5 comprises a single-instruction-multiple-data device with multiple apparatuses 10, 20, 30 wherein a predicate register 40 is specified by an instruction 16 providing predicate values 42 per apparatus 10 to select an execution of a floating-point multiply-add operation for each apparatus 10.

The predicate register 40 comprises multi-bit predicate fields 44 comprising the predicate values 42. The predicate-fields 44 are enabled by the instructions 16 for executing the predicate values 42 on lanes 70, 71, 72 of apparatuses 10, 20, 30 to change a flavor of individual lanes 70, 71, 72 based on the respective predicates 42 for each lane 70, 71, 72.

At least one multiply-add unit 15, 25, 35 is configured to substitute at least one operand of an internal operation by at least one value of a predefined operand value set 50. The operation is triggered by a predicate value 42 specified and decoded into a selection code parameter by a predicate logic 77, 78, 79 based on predicate values 42.

The apparatuses 10, 20, 30 represent N identical SIMD lanes 70, 71, 72, where N is a natural number, with each comprising three operand multiplexor circuitries 11, 12, 13; 21, 22, 23; 31, 32, 33, an FMA unit 15, 25, 35 similar to the embodiment shown in Figure 4 and a predicate decode logic 77, 78, 79.

A predicate register 40 comprising of N multi-bit predicate fields 44 enables an FMA instruction executed on all N SIMD lanes 70, 71, 72 to change the flavour of individual lanes 70, 71, 72 based on the respective predicates 42 for each lane 70, 71, 72, such that:

A predicate value 0 results in -0.
A predicate value 1 results in the operation A*B+C.
A predicate value 2 results in the operation A*B, in particular with the correct +0 or -0 as if using a multiply unit.
A predicate value 3 results in the operation A + C, in particular with the correct +0 or -0 as if using an addition unit.
A predicate value 4 results in the operation B + C, in particular with the correct +0 or -0 as if using an addition unit.
A predicate value 5 results in A, in particular bitwise identical to input A for all values of A.
A predicate value 6 results in B, in particular bitwise identical to input B for all values of B.
A predicate value 7 results in C, in particular bitwise identical to input C for all values of C.

In another embodiment the predicates 42 could be encoded in the instruction 16.

The set of 8 operations shown in Figure 5 could be expanded by 2 more operations: the predicate value resulting in 1 and the predicate value resulting in 1+C. A potential use of these 2 operations would be, e.g., based on predicate value, do an increment of a counter or not.

A given implementation could have four predicate bits, to choose from above 10 possible operations. A given implementation with two predicate bits could support any 4 of the above 10 operations. A given implementation with three predicate bits could support any 8 of the above 10 operations.

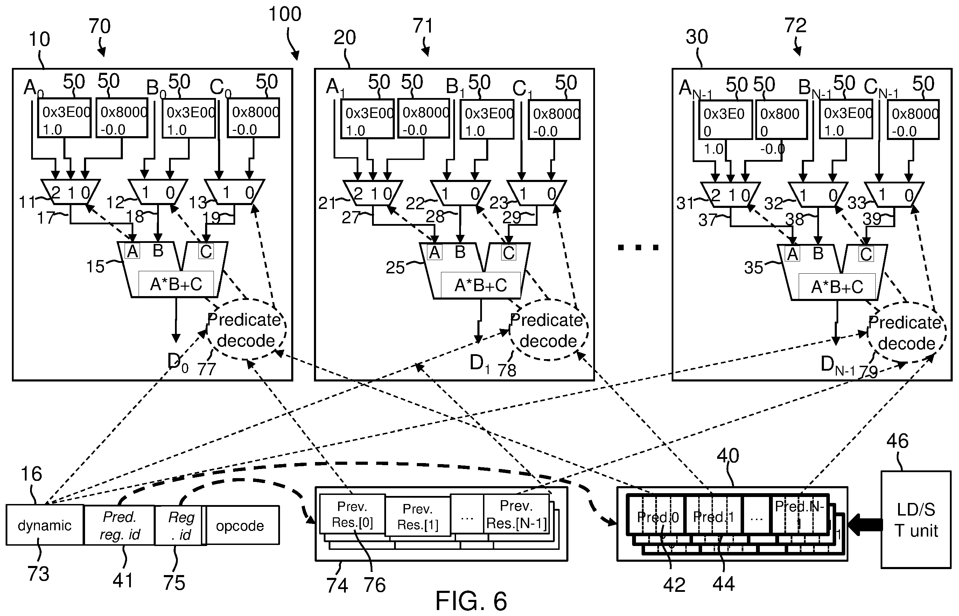

Figure 6 depicts a processor 100 comprising a single-instruction-multiple-data device with multiple apparatuses 10, 20, 30 with at least one multiply-add unit 15, 25, 35 each, according to a further embodiment using dynamic multi-bit predication of individual SIMD lanes 70, 71, 72 based on a previous result vector.

At least one operand of an internal operation in the at least one multiply-add unit 15, 25, 35 of an apparatus 10 is substituted by at least one value of a predefined operand value set 50. The operation is triggered by a predicate value 42 specified and decoded into a selection code parameter by a predicate logic 77, 78, 79 based on predicate values 42 provided by a load-store unit 46, on results 76 of previous instructions 16 and on an information 73 about dynamic or static use.

A vector register 74 comprising a result 76 of a previous SIMD instruction is added to allow dynamic predication. The previous result 76 has a range of at least two possible values 0 or 1. In one embodiment the vector register 74 can be a register or a register file holding a primary result 76 of a previous SIMD instruction per SIMD lane 70, 71, 72. In another embodiment the vector register 74 can be a condition code register holding a condition code as secondary result of a previous SIMD instruction supporting condition codes, e.g., compare, min, max, per SIMD lane.

The instruction code 16 is extended at least by one bit to enable dynamic predication. The instruction code 16 now contains at least one opcode field, a unique code representing that is an FMA instruction, and one field 73 indicating dynamic predication. Optionally it can contain additionally one more field for a predicate register index 41 in case there exist multiple predicate registers 40. Optionally it can contain additionally one more field for a register index 75 in case the embodiment uses the primary result of a previous SIMD instruction in a register file 74 for dynamic predication.

Each lane 70, 71, 72 of the SIMD predicate register 40 is further subdivided in len(range(condition code)) pre-compiled predicates.

The predicate register 40 can be written to by e.g., a load/store unit 46 or similar units that have the ability to move data from memory or from an immediate instruction field to registers.

The predicate decode logic 77, 78, 79 per SIMD lane 70, 71, 72 is extended compared to the predicate decode logic 77, 78, 79 in the embodiment shown in Figure 5, such that:

If dynamic predication is enabled by the respective bit 73 in the instruction code 16, then the value of the condition code for the particular lane 70, 71, 72 selects one of the pre-compiled predicates 42 from the predicate register 40 for the particular lane 70, 71, 72, i.e.,
predicate.<lane_id>[condition code_value].
If dynamic predication is disabled, then the first of the pre-compiled predicates 42 is selected, i.e., predicate.<lane_id>[0].

Another embodiment could use the primary result of a previous instruction instead of the condition code.

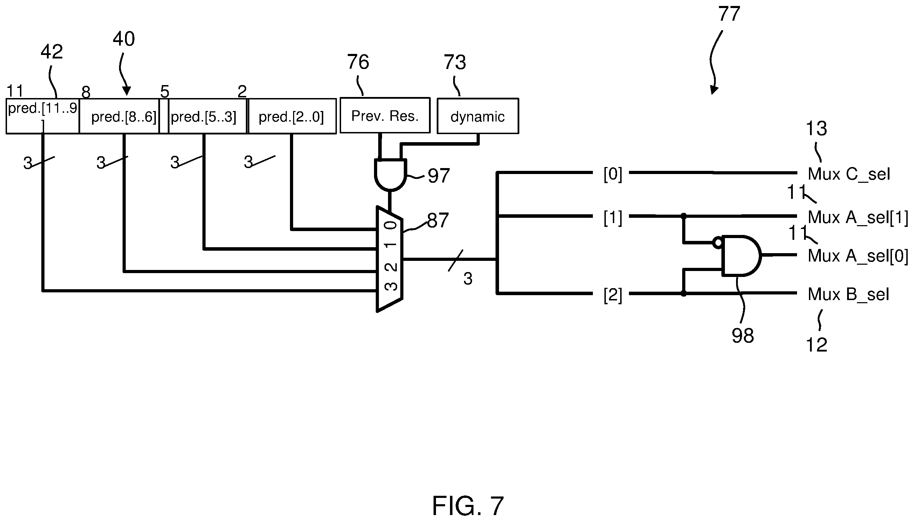

Figure 7 depicts an example implementation of the dynamic predicate decode logic 77 as used in the first lane 70 of the embodiment shown in Figure 6 according to a further embodiment.

For sake of simplicity, it is assumed that the previous result vector 76 has a range of four possible values per SIMD lane 70, 71, 72, e.g., being the result of a generalized vector compare between two vectors X and Y, where the result per element is 0 if x!= y, 1 if x==z, 2 if x<y, 3 if x<=y.

A multiplexor circuitry 87 is used to select one of the pre-compiled predicate values 42 for that lane 70 comprising multiplexers 11, 12, 13 for performing the floating-point multiply-add operation.

The select signal for the multiplexor circuitry 87 is controlled by the previous result 76, whereby an additional AND gate 97 with the first input connect to the 'dynamic' bit 73 of the extended FMA instruction code and the second input connected to the previous result 76 forces the select to '0' if dynamic predication is disabled.

The output of the multiplexor circuitry 87 is connected to the decode logic 77 that comprises one AND gate 98 with an inverted first input [1] and a second input [2] to derive the select signals for the operand multiplexor circuitries 11, 12, 13 of the first lane 70.

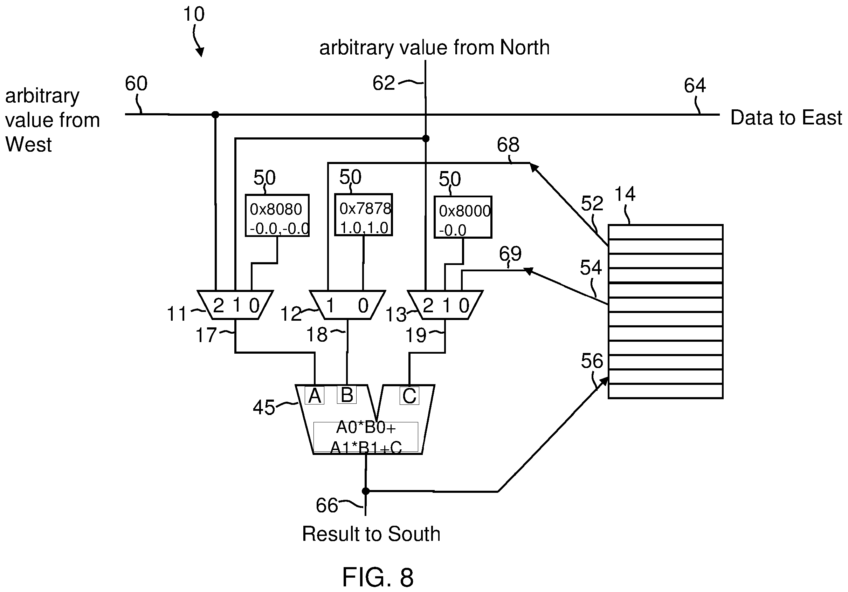

Figure 8 depicts an apparatus 10 for performing a floating-point multiply-multiply-add operation according to a further embodiment of the invention.

The apparatus 10 is configured for performing a floating-point multiply-multiply-add operation of a form A0*B0+A1*B1+C, with input floating-point operands comprising A0, A1, B0, B1, C.

The apparatus 10 allows to load a concatenated pair of two arbitrary floating-point values to a register file 14 through a floating-point multiply-multiply-add (FMMA) unit 45.

The apparatus 10 as a processing tile comprises three operand multiplexor circuitries 11, 12, 13, a local register file (LRF) 14 and an FMMA unit 45.

The multiplexor circuitry 11 can be configured to select either a data source from the West input 60, a data source from the North input 62 or the concatenated constant pair 0x8000 (-0.0,+0.0) from the predefined set 50. The multiplexor circuitry 12 can be configured to select either a read-port 52 of the register file 14 or the constant 0x3E00 (1.0, +0.0). The multiplexor circuitry 13 can be configured to select either a data source from the North input 62, a read-port 54 of the register file 14 or the constant 0x8000 (-0.0).

The local register file 14 is a register file with two read ports 52, 54 and one write port 56.

The FMMA unit 45 can multiply a first half of operand A (A0) with a first half of operand B (B0) and a second half of operand A (A1) with a second half of operand B (B1), then sum the two products A0*B0 + A1*B1 and add the third input (operand C) to the sum of product.

In the following table an exemplary setup of the operand of the multiplexor circuitries 11, 12, 13 with a selection code parameter to load arbitrary floating-point values from the North input 62 through the FMMA unit 45 to the local register file 14 is depicted.

| MUX | Sel code | Selected source |
|---|---|---|
| 11 | 0 | Constant 0x8080 (-0.0,-0.0) in FMMA unit 45 |
| 12 | 0 | Constant 0x7878 (1.0,1.0) in FMMA unit 45 |
| 13 | 2 | Data from North input 62 |

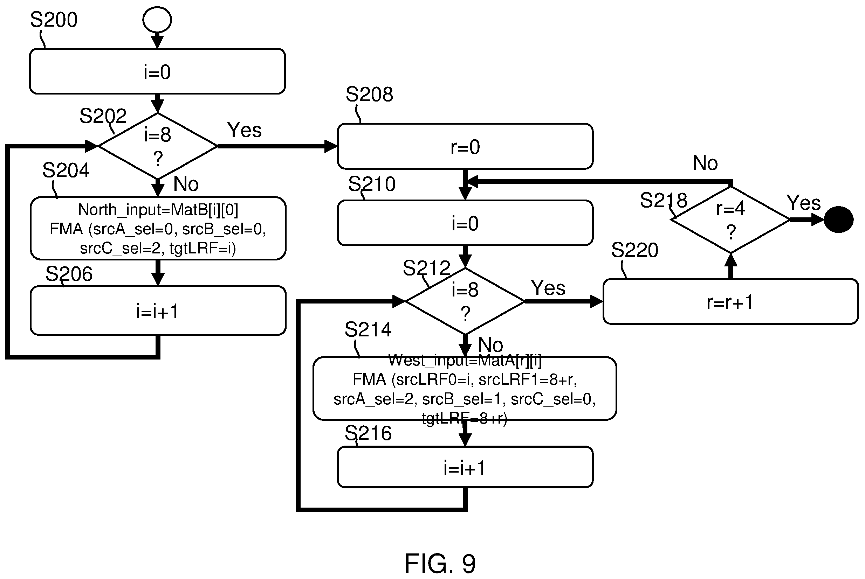

Figure 9 depicts a flow chart of an example matrix-multiply program according to a further embodiment of the invention. Information stored in a matrix may extensively be used in AI applications. High throughput as well as high efficiency operations are essential for operating AI accelerators, for instance. FMA units according to embodiments of the invention may serve as an efficient infrastructure for loading floating-point data to logical register files without significant hardware overhead.

After initializing a column index I with 0 in step S200, first a column of 8 elements of a second matrix (MatB) is loaded into the local register file (LRF) via an FMA unit (steps S204). The element number is increased in step S206 and checked if less than 8 in step S202. Then, for 4 rows of a first matrix (MatA) each, 8 elements are multiplied and accumulated with the other 8 elements stored in the LRF (step S214) via the FMA unit. Element numbers of a column are checked in step S212 and increased in step S216 until the number equals 8. The row number is checked in step S218 and increased in step S220 until the number equals 4.

For sake of simplicity the example does not use interleaved computation order, which in reality would be needed in a pipelined design to avoid read-before-write hazards.

An advantage of using static prediction with a selectable operation FMA unit may be demonstrated by computing a classically non-vectorizable problem. For a high-level pseudo-code of computing a classically non-vectorizable problem on a state-of-the-art processor,

$$D[0]=A[0]*B[0]+C[0];$$

$$D[1]=C[1];$$

$$D[2]=B[2]+C[2];$$

$$X[3]=-0.0;$$

the pseudo-assembly-code of computing the same problem with static prediction would look like this

```
0: mvi PR0, 0x007001005000      // move imm value to
                                // predicate register 0
2: vsofma D, A, B, C, PR0       // vector-soFMA with static
                                // predication from PR0
```

Thus, a very short and concise code results using a soFMA unit according to an embodiment of the invention.

An advantage of using dynamic prediction with a selectable operation FMA unit may be demonstrated by computing a classically non-vectorizable problem. For a high-level pseudo-code of computing a classically non-vectorizable problem on a state-of-the-art processor,

```
if (X[0] != Y[0]){
D[0]=A[0]*B[0];
}else{
 D[0]=A[0]*B[0]+C[0];
};
if (X[1] < Y[1]){
 D[1]=C[1];
}else{
 D[1]=-0.0;
};
if (X[2] <= Y[2]){
 D[2]=B[2]+C[2];
}else{
 D[2]=A[2];
};
X[3]=-0.0;
```

the pseudo-assembly-code of computing the same problem on proposed soFMA with dynamic predication would look like this:

```
0: mvi PR1, 0xffe040c92000      // move imm value to
                                // predicate register 1
1: vfcmp R3, X, Y        // vector-compare X against
                                // Y and write result
                 // (0: !=, 1: ==, 2: <,
                                // 3: <=) to R3
2: vsofmadyn D, A, B, C, PR1, R3   // vector-soFMA with dynamic
                                // predication using
                                // previous
                 // result in R3 to select
                                // predicates from PR1
```

The dynamic prediction also results in a very short and concise code.

## Claims

1. A processor-implemented method for performing a floating-point multiply-add operation of a form A*B+C on at least one multiply-add unit (15, 25, 35, 45), comprising:

> three input floating-point operands A, B, C, wherein a substitution logic (94, 95, 96) substitutes at least one of the operands A, B, C by at least one value of a predefined operand value set (50); and
> triggering the floating-point multiply-add operation by an instruction (16) with a selection code parameter to specify the configuration of the substitution logic (94, 95, 96).

2. The method according to claim 1, further comprising:

> providing at least one of the floating-point operands A, B, C by the substitution logic (94, 95, 96); and
> configuring the substitution logic (94, 95, 96) to be separately configurable to substitute the operand A, B, C by the at least one value of the predefined operand value set (50) to be propagated to at least one output port (17, 18, 19) of the substitution logic (94, 95, 96).

3. The method according to claim 1 or 2, wherein the substitution logic (94, 95, 96) is configured as a multiplexor circuitry (11, 12, 13), the method further comprising:

> providing at least one of the three floating-point operands A, B, C by the multiplexor circuitry (11, 12, 13) respectively, the multiplexor circuitry comprising a first input port (80, 81, 82; 83, 84; 85, 86) for the respective floating-point operand A, B, C and at least a second input port (80, 81, 82; 83, 84; 85, 86) for at least one value of a predefined operand value set (50), and at least one output port (17, 18, 19); and
> configuring the multiplexor circuitry (11, 12, 13) to be separately configurable to select one of the input ports (80, 81, 82; 83, 84; 85, 86) to be propagated to the at least one output port (17, 18, 19).

4. The method according to any one of the claims 1 to 3, further comprising:
configuring the predefined operand value set (50) at least as a set comprising values - 0, +0, +1, -1.

5. The method according to claims 3 or 4, further comprising:
selecting one of the input ports (80, 81, 82; 83, 84; 85, 86) to be propagated to the at least one output port (17, 18, 19) by the selection code parameter, being at least one of a set corresponding to selectable operations comprising parameters -0, C, A, A+C, B, B+C, A*B, A*B+C, C+1, 1, -A+C, -B+C.

6. The method according to any one of the claims 1 to 5, further comprising:
performing a floating-point multiply-multiply-add operation (45) of a form A0*B0+A1*B1+C, with input floating-point operands comprising operands A0, A1, B0, B1, C.

7. The method according to any one of the claims 1 to 6, further comprising:
providing floating-point operands by a register file (14) as input operands (68, 69) and receiving an output (67) from the substitution logic (94, 95, 96) by a register file (14) with at least two read ports (52, 54) and one write port (56), in particular providing the input operands (68, 69) being triggered by the instruction (16) with a selection code parameter.

8. The method according to any one of the claims 1 to 7, further comprising:
when a processor (100) comprises an interconnected mesh of apparatuses (10) with at least one multiply-add unit (15, 25, 35, 45) each, wherein each multiply-add unit (15, 25, 35, 45) comprises at least one local register file (14) for an intermediate storage of data values, triggering the floating-point multiply-add operation by an instruction (16) with a selection code parameter to specify a configuration of the substitution logic (94, 95, 96).

9. The method according to any one of the claims 1 to 8, further comprising:
when a processor (100) comprises a single-instruction-multiple-data device with multiple apparatuses (10) with at least one multiply-add unit (15, 25, 35, 45) each, wherein providing predicate values (42) per apparatus (10) by a predicate register (40) is specified by an instruction (16), selecting an execution of a floating-point multiply-add operation for each apparatus (10).

10. The method according to claim 9, further comprising:
when the predicate register (40) comprises multi-bit predicate fields (44) comprising the predicate values (42), which are enabled by the instructions (16), executing predicate values (42) on lanes (70, 71, 72) of apparatuses (10, 20, 30) to change a flavor of individual lanes (70, 71, 72) based on the respective predicate value (42) for each lane (70, 71, 72).

11. The method according to claim 9 or 10, wherein at least one operand of an internal operation in the at least one multiply-add unit (15, 25, 35, 45) of an apparatus (10) is substituted by at least one value of a predefined operand value set (50), and the operation being triggered by a predicate value (42) specified and decoded into a selection code parameter by a predicate logic (77, 78, 79) based on predicate values (42) provided by a load-store unit (46), on results (76) of previous instructions (16) and on an information (73) about dynamic or static use.

12. An apparatus (10) configured to perform a floating-point multiply-add operation of a form A*B+C on at least one multiply-add unit (15, 25, 35, 45) with a method which comprises:
three input floating-point operands A, B, C, wherein at least one of the floating-point operands A, B, C is provided by a substitution logic (94, 95, 96), and the substitution logic (94, 95, 96) substitutes at least one of the operand A, B, C by the at least one value of a predefined operand value set (50) to be propagated to at least one output port (17, 18, 19) of the substitution logic (94, 95, 96), wherein the floating-point multiply-add operation is triggered by an instruction (16) with a selection code parameter to specify a configuration of the substitution logic (94, 95, 96).

13. The apparatus according to claim 12, wherein the substitution logic (94, 95, 96) is configured as a multiplexor circuitry (11, 12, 13), wherein at least one of the three floating-point operands A, B, C is provided by the multiplexor circuitry (11, 12, 13) respectively, the multiplexor circuitry (11, 12, 13) comprising:

a first input port (80, 81, 82; 83, 84; 85, 86) for the respective floating-point operand A, B, C;
at least a second input port (80, 81, 82; 83, 84; 85, 86) for at least one value of a predefined operand value set; and
at least one output port (17, 18, 19) assigned to the corresponding first and second input ports (80, 81, 82; 83, 84; 85, 86), wherein the multiplexor circuitry (11, 12, 13) is configured to be separately configurable to select one of the input ports (80, 81, 82; 83, 84; 85, 86) to be propagated to the at least one output port (17, 18, 19).

14. The apparatus according to claim 12 or claim 13, comprising at least a multiply-add unit (15, 25, 35, 45) with three inputs (90, 91, 92), wherein at least one input (90, 91, 92) is received from an output (17, 18, 19) of the at least one substitution logic (94, 95, 96).

15. The apparatus according to any one of the claims 12 to 14, comprising a register file (14) with at least two read ports (52, 54) and one write port (56), wherein the register file (14) is configured for providing input operands (68, 69) and is configured for receiving an output (67) from the multiply-add unit (15, 25, 35, 45) , in particular providing the input operands (68, 69) being triggered by the instruction (16) with a selection code parameter.

**Patentansprüche**

1. Mit einem Prozessor realisiertes Verfahren zum Durchführen einer Gleitkommamultiplikations-Additionsoperation einer Form A*B+C auf mindestens einer Multiplikations-Additionseinheit (15, 25, 35, 45), aufweisend:

drei Eingabe-Gleitkommaoperanden A, B, C, wobei eine Substitutionslogik (94, 95, 96) mindestens einen der Operanden A, B, C durch mindestens einen Wert aus einer vorgegebenen Operanden-Wertemenge (50) ersetzt; und
Auslösen der Gleitkommamultiplikations-Additionsoperation durch eine Anweisung (16) mit einem Auswahlcode-Parameter zum Angeben der Konfiguration der Substitutionslogik (94, 95, 96).

2. Verfahren nach Anspruch 1, das ferner aufweist:

Bereitstellen mindestens eines der Gleitkommaoperanden A, B, C durch die Substitutionslogik (94, 95, 96); und
Konfigurieren der Substitutionslogik (94, 95, 96) als separat konfigurierbar zum Ersetzen des Operanden A, B, C durch den mindestens einen Wert aus der vorgegebenen Operanden-Wertemenge (50), der an mindestens einen Ausgabeanschluss (17, 18, 19) der Substitutionslogik (94, 95, 96) weiterzuleiten ist.

3. Verfahren nach Anspruch 1 oder 2, wobei die Substitutionslogik (94, 95, 96) als eine Multiplexschaltung (11, 12, 13) konfiguriert ist, wobei das Verfahren ferner aufweist:

Bereitstellen mindestens eines der drei Gleitkommaoperanden A, B, C jeweils durch die Multiplexschaltung (11, 12, 13), wobei die Multiplexschaltung einen ersten Eingabeanschluss (80, 81, 82; 83, 84; 85, 86) für den zugehörigen Gleitkommaoperanden A, B C und mindestens einen zweiten Eingabeanschluss (80, 81, 82; 83, 84;

85, 86) für mindestens einen Wert aus einer vorgegebenen Operanden-Wertemenge (50) und mindestens einen Ausgabeanschluss (17, 18, 19) aufweist; und

Konfigurieren der Multiplexschaltung (11, 12, 13) als separat konfigurierbar zum Auswählen eines der Eingabeanschlüsse (80, 81, 82; 83, 84; 85, 86), der an den mindestens einen Ausgabeanschluss (17, 18, 19) weiterzuleiten ist.

4. Verfahren nach einem der Ansprüche 1 bis 3, das ferner aufweist:
Konfigurieren der vorgegebenen Operanden-Wertemenge (50) mindestens als eine Menge, die die Werte -0, +0, +1 und -1 aufweist.

5. Verfahren nach den Ansprüchen 3 oder 4, das ferner aufweist:
Auswählen eines der an den mindestens einen Ausgabeanschluss (17, 18, 19) weiterzuleitenden Eingabeanschlüsse (80, 81, 82; 83, 84; 85, 86) durch den Auswahlcode-Parameter, bei dem es sich um mindestens ein Element aus einer Menge handelt, die mit auswählbaren Operationen übereinstimmt und die Parameter -0, C, A, A+C, B, B+C, A*B, A*B+C, C+1, 1, -A+C, -B+C aufweist.

6. Verfahren nach einem der Ansprüche 1 bis 5, das ferner aufweist:
Durchführen einer Gleitkommamultiplikations-Additionsoperation (45) von einer Form A0*B0+A1*B1+C mit Eingabe-Gleitkommaoperanden, die die Operanden A0, A1, B0, B1, C aufweisen.

7. Verfahren nach einem der Ansprüche 1 bis 6, das ferner aufweist:
Bereitstellen der Gleitkommaoperanden durch eine Registerdatei (14) als Eingabeoperanden (68, 69) und Empfangen einer Ausgabe (67) von der Substitutionslogik (94, 95, 96) durch eine Registerdatei (14) mit mindestens zwei Leseanschlüssen (52, 54) und einem Schreibanschluss (56), insbesondere Bereitstellen der durch die Anweisung (16) ausgelösten Eingabeoperanden (68, 69) mit einem Auswahlcode-Parameter.

8. Verfahren nach einem der Ansprüche 1 bis 7, das ferner aufweist:
wenn ein Prozessor (100) ein verbundenes Netz von Vorrichtungen (10) mit jeder mindestens einen Multiplikations-Additionseinheit (15, 25, 35, 35) aufweist, wobei jede Multiplikations-Additionseinheit (15, 25, 35, 45) mindestens eine lokale Registerdatei (14) für eine vorübergehende Speicherung von Datenwerten aufweist, Auslösen der Gleitkommamultiplikations-Additionsoperation durch eine Anweisung (16) mit einem Auswahlcode-Parameter zum Angeben einer Konfiguration der Substitutionslogik (94, 95, 96).

9. Verfahren nach einem der Ansprüche 1 bis 8, das ferner aufweist:
wenn ein Prozessor (100) eine Single-Instruction-Multiple-Data-Einheit mit mehreren Vorrichtungen (10) mit jeder mindestens einen Multiplikations-Additionseinheit (15 25, 35, 45) aufweist, wobei das Bereitstellen von Prädikatwerten (42) je nach Vorrichtung (10) durch ein Prädikatregister (40) von einer Anweisung (16) angegeben wird, Auswählen einer Ausführung einer Gleitkommamultiplikations-Additionsoperation für jede Vorrichtung (10).

10. Verfahren nach Anspruch 9, das ferner aufweist:
wenn das Prädikatregister (40) Mehrbit-Prädikatfelder (44) aufweist, die die durch die Anweisungen (16) aktivierten Prädikatwerte (42) aufweisen, Ausführen der Prädikatwerte (42) auf den Lanes (70, 71, 72) der Vorrichtungen (10, 20, 30) zum Ändern einer Ausführungsart einzelner Lanes (70, 71, 72) auf Grundlage des zugehörigen Prädikatwerts (42) für jede Lane (70, 71, 72).

11. Verfahren nach Anspruch 9 oder 10, wobei mindestens ein Operand einer internen Operation in der mindestens einen Multiplikations-Additionseinheit (15, 25, 35, 45) einer Vorrichtung (10) durch mindestens einen Wert aus einer vorgegebenen Operanden-Wertemenge (50) ersetzt wird, und wobei die Operation durch einen Prädikatwert (42) ausgelöst wird, der durch eine Prädikatlogik (77, 78, 79) in einen Auswahlcode-Parameter auf Grundlage von Prädikatwerten (42), die von einer Lade-Speichereinheit (46) bereitgestellt werden, auf Ergebnissen (76) früherer Anweisungen (16) und Daten (73) über eine dynamische oder statische Nutzung angegeben und decodiert wird.

12. Vorrichtung (10), die zum Durchführen einer Gleitkommamultiplikations-Additionsoperation von einer Form A*B+C auf mindestens einer Multiplikations-Additionseinheit (15, 25, 35, 45) mit einem Verfahren konfiguriert ist, das aufweist:
drei Eingabe-Gleitkommaoperanden A, B, C, wobei mindestens einer der Gleitkommaoperanden A, B, C durch eine Substitutionslogik (94, 95, 96) bereitgestellt wird, und wobei die Substitutionslogik (94, 95, 96) mindestens einen der Operanden A, B, C durch den mindestens einen Wert aus einer vorgegebenen Operanden-Wertemenge (50) ersetzt,

## EP 4 423 601 B1

der an mindestens einen Ausgabeanschluss (17, 18, 19) der Substitutionslogik (94, 95, 96) weiterzuleiten ist, wobei die Gleitkommamultiplikations-Additionsoperation durch eine Anweisung (16) mit einem Auswahlcode-Parameter zum Angeben einer Konfiguration der Substitutionslogik (94, 95, 96) ausgelöst wird.

13. Vorrichtung nach Anspruch 12, wobei die Substitutionslogik (94, 95, 96) als eine Multiplexschaltung (11, 12, 13) konfiguriert ist, wobei mindestens einer der drei Gleitkommaoperanden A, B, C jeweils durch die Multiplexschaltung (11, 12, 13) bereitgestellt wird, wobei die Multiplexschaltung (11, 12, 13) aufweist:

einen ersten Eingabeanschluss (80, 81, 82; 83, 84; 85, 86) für den zugehörigen Gleitkommaoperanden A, B, C; mindestens einen zweiten Eingabeanschluss (80, 81, 82; 83, 84; 85, 86) für mindestens einen Wert aus einer vorgegebenen Operanden-Wertemenge; und mindestens einen Ausgabeanschluss (17, 18, 19), der den entsprechenden ersten und zweiten Eingabeanschlüssen (80, 81, 82; 83, 84; 85, 86) zugewiesen ist, wobei die Multiplexschaltung (11, 12, 13) so konfiguriert ist, dass sie separat zum Auswählen einer der Eingabeanschlüsse (80, 81, 82; 83, 84; 85, 86) konfigurierbar ist, der an den mindestens einen Ausgabeanschluss (17, 18, 19) weitergeleitet werden muss.

14. Vorrichtung nach Anspruch 12 oder 13, die mindestens eine Multiplikations-Additionseinheit (15, 25, 35, 45) mit drei Eingängen (90, 91, 92) aufweist, wobei mindestens ein Eingang (90, 91, 92) von einem Ausgang (17, 18, 19) der mindestens einen Substitutionslogik (94, 95, 96) empfangen wird.

15. Vorrichtung nach einem der Ansprüche 12 bis 14, die eine Registerdatei (14) mit mindestens zwei Leseanschlüssen (52, 54) und einem Schreibanschluss (56) aufweist, wobei die Registerdatei (14) zum Bereitstellen von Eingabeoperanden (68, 69) und zum Empfangen einer Ausgabe (67) von der Multiplikations-Additionseinheit (15, 25, 35, 45), insbesondere zum Bereitstellen der durch die Anweisung (16) ausgelösten Eingabeoperanden (68, 69) mit einem Auswahlcode-Parameter konfiguriert ist.

## Revendications

1. Procédé mis en œuvre par processeur pour réaliser une opération de multiplication-addition à virgule flottante d'une forme A*B+C sur au moins une unité de multiplication-addition (15, 25, 35, 45), comprenant :

trois opérandes à virgule flottante d'entrée A, B, C, dans lequel une logique de substitution (94, 95, 96) substitue au moins un des opérandes A, B, C par au moins une valeur d'un ensemble de valeurs d'opérandes prédéfini (50) ; et le déclenchement de l'opération de multiplication-addition à virgule flottante par une instruction (16) avec un paramètre de code de sélection pour spécifier la configuration de la logique de substitution (94, 95, 96).

2. Procédé selon la revendication 1, comprenant en outre :

la fourniture d'au moins un des opérandes à virgule flottante A, B, C par la logique de substitution (94, 95, 96) ; et la configuration de la logique de substitution (94, 95, 96) pour être configurable séparément afin de substituer l'opérande A, B, C par au moins une valeur de l'ensemble de valeurs d'opérandes prédéfini (50) à propager vers au moins un port de sortie (17, 18, 19) de la logique de substitution (94, 95, 96).

3. Procédé selon la revendication 1 ou 2, dans lequel la logique de substitution (94, 95, 96) est configurée comme un circuit multiplexeur (11, 12, 13), le procédé comprenant en outre :

la fourniture d'au moins un des trois opérandes à virgule flottante A, B, C par le circuit multiplexeur (11, 12, 13), respectivement, le circuit multiplexeur comprenant un premier port d'entrée (80, 81, 82 ; 83, 84 ; 85, 86) pour l'opérande à virgule flottante respectif A, B, C et au moins un deuxième port d'entrée (80, 81, 82 ; 83, 84 ; 85, 86) pour au moins une valeur d'un ensemble de valeurs d'opérandes prédéfini (50), et au moins un port de sortie (17, 18, 19) et la configuration du circuit multiplexeur (11, 12, 13) pour être configurable séparément afin de sélectionner un des ports d'entrée (80, 81, 82 ; 83, 84 ; 85, 86) à propager vers au moins l'un port de sortie (17, 18, 19).

4. Procédé selon une quelconque des revendications 1 à 3, comprenant en outre :
la configuration de l'ensemble de valeurs d'opérande prédéfini (50) au moins comme un ensemble comprenant les valeurs - 0, +0, +1, -1.

**5.** Procédé selon les revendications 3 ou 4, comprenant en outre :
la sélection d'un des ports d'entrée (80, 81, 82 ; 83, 84 ; 85, 86) à propager vers au moins l'un port de sortie (17, 18, 19) par le paramètre de code de sélection, étant au moins un d'un ensemble correspondant à des opérations sélectionnables comprenant des paramètres -0, C, A, A+C, B, B+C, A*B, A*B+C, C+1, 1, -A+C, -B+C.

**6.** Procédé selon une quelconque des revendications 1 à 5, comprenant en outre :
la réalisation d'une opération de multiplication-multiplication-addition à virgule flottante (45) d'une forme A0*B0+A1*B1+C, avec des opérandes à virgule flottante d'entrée comprenant des opérandes A0, A1, B0, B1, C.

**7.** Procédé selon une quelconque des revendications 1 à 6, comprenant en outre :
la fourniture d'opérandes à virgule flottante par un fichier de registre (14) comme opérandes d'entrée (68, 69) et la réception d'une sortie (67) de la logique de substitution (94, 95, 96) par un fichier de registre (14) doté d'au moins deux ports de lecture (52, 54) et un port d'écriture (56), en particulier la fourniture des opérandes d'entrée (68, 69) déclenchés par l'instruction (16) d'un paramètre de code de sélection.

**8.** Procédé selon une quelconque des revendications 1 à 7, comprenant en outre :
lorsqu'un processeur (100) comprend un réseau interconnecté d'appareils (10) avec chacun au moins une unité de multiplication-addition (15, 25, 35, 45), dans lequel chaque unité de multiplication-addition (15, 25, 35, 45) comprend au moins un fichier de registre local (14) pour un stockage intermédiaire des valeurs de données, le déclenchement de l'opération de multiplication-addition à virgule flottante par une instruction (16) avec un paramètre de code de sélection pour spécifier une configuration de la logique de substitution (94, 95, 96).

**9.** Procédé selon une quelconque des revendications 1 à 8, comprenant en outre : lorsqu'un processeur (100) comprend un dispositif à instruction unique et données multiples avec plusieurs appareils (10) comportant au moins une unité de multiplication-addition (15, 25, 35, 45) chacun, dans lequel la fourniture de valeurs de prédicat (42) par appareil (10) par un registre de prédicat (40) est spécifiée par une instruction (16) qui sélectionne une exécution d'une opération de multiplication-addition à virgule flottante pour chaque appareil (10).

**10.** Procédé selon la revendication 9, comprenant en outre :
lorsque le registre de prédicat (40) comprend des champs de prédicat multibits (44) comprenant les valeurs de prédicat (42), qui sont activées par les instructions (16), l'exécution des valeurs de prédicat (42) sur les voies (70, 71, 72) des appareils (10, 20, 30) afin de modifier un type de voies individuelles (70, 71, 72) sur la base de la valeur de prédicat (42) de chaque voie (70, 71, 72).

**11.** Procédé selon la revendication 9 ou 10, dans lequel au moins un opérande d'une opération interne dans l'au moins une unité de multiplication-addition (15, 25, 35, 45) d'un appareil (10) est substitué par au moins une valeur d'un ensemble de valeurs d'opérandes prédéfini (50), et l'opération est déclenchée par une valeur de prédicat (42) spécifiée et décodée en un paramètre de code de sélection par une logique de prédicat (77, 78, 79) basée sur des valeurs de prédicat (42) fournies par une unité de stockage de charge (46), sur des résultats (76) d'instructions précédentes (16) et sur une information (73) concernant une utilisation dynamique ou statique.

**12.** Appareil (10) configuré pour réaliser une opération de multiplication-addition à virgule flottante d'une forme A*B+C sur au moins une unité de multiplication-addition (15, 25, 35, 45) selon un procédé qui comprend :
trois opérandes à virgule flottante d'entrée A, B, C, dans lequel au moins un des opérandes à virgule flottante d'entrée A, B, C est fourni par une logique de substitution (94, 95, 96), et la logique de substitution (94, 95, 96) substitue au moins un des opérandes A, B, C par au moins une valeur d'un ensemble de valeurs d'opérandes prédéfini (50) à propager vers au moins un port de sortie (17, 18, 19) de la logique de substitution (94, 95, 96), dans lequel l'opération de multiplication-addition à virgule flottante est déclenchée par une instruction (16) dont le paramètre de code de sélection spécifie la configuration de la logique de substitution (94, 95, 96).

**13.** Appareil selon la revendication 12, dans lequel la logique de substitution (94, 95, 96) est configurée comme un circuit multiplexeur (11, 12, 13), dans lequel au moins un des trois opérandes à virgule flottante A, B, C est fourni par le circuit multiplexeur (11, 12, 13) respectivement, le circuit multiplexeur (11, 12, 13) comprenant :

un premier port d'entrée (80, 81, 82 ; 83, 84 ; 85, 86) pour l'opérande à virgule flottante respectif A, B, C ;
au moins un deuxième port d'entrée (80, 81, 82 ; 83, 84 ; 85, 86) pour au moins une valeur d'un ensemble de valeurs d'opérandes prédéfini ; et

au moins un port de sortie (17, 18, 19) attribué aux premier et deuxième ports d'entrée correspondants (80, 81, 82 ; 83, 84 ; 85, 86), dans lequel le circuit multiplexeur (11, 12, 13) est configuré pour être configurable séparément afin de sélectionner un des ports d'entrée (80, 81, 82 ; 83, 84 ; 85, 86) à propager vers au moins un port de sortie (17, 18, 19).

14. Appareil selon la revendication 12 ou la revendication 13, comprenant au moins une unité de multiplication-addition (15, 25, 35, 45) avec trois entrées (90, 91, 92), dans lequel au moins une entrée (90, 91, 92) est reçue d'une sortie (17, 18, 19) d'au moins une logique de substitution (94, 95, 96).

15. Appareil selon une quelconque des revendications 12 à 14, comprenant un fichier de registre (14) avec au moins deux ports de lecture (52, 54) et un port d'écriture (56), dans lequel le fichier de registre (14) est configuré pour la fourniture des opérandes d'entrée (68, 69) et est configuré pour la réception d'une sortie (67) de l'unité de multiplication-addition (15, 25, 35, 45), en particulier en fournissant les opérandes d'entrée (68, 69) déclenchés par l'instruction (16) avec un paramètre de code de sélection.

FIG. 1

FIG. 2

FIG. 3

FIG. 4

FIG. 5

EP 4 423 601 B1

FIG. 6

FIG. 7

FIG. 8

EP 4 423 601 B1

FIG. 9

**EP 4 423 601 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190042254 A1
- US 20210089316 A1
- US 9778908 B2
- EP 3396535 A
- EP 3640792 A